# EUROPÄISCHE PATENTSCHRIFT

(11) **EP 4 114 666 B1**
(45) Veröffentlichungstag und Bekanntmachung des Hinweises auf die Patenterteilung: **10.01.2024**
(21) Anmeldenummer: 21730850.1
(22) Anmeldetag: 01.06.2021
(51) Int. Cl.: B41F 33/00, G01N 21/88, G01N 21/89

(54) **VERFAHREN ZUR FOTOGRAFISCHEN ABBILDUNG EINES OBJEKTES UND ANORDNUNG ZUR AUSFÜHRUNG DIESES VERFAHRENS**
METHOD FOR THE PHOTOGRAPHIC IMAGING OF AN OBJECT AND ARRANGEMENT FOR CARRYING OUT SAID METHOD
PROCÉDÉ D'IMAGERIE PHOTOGRAPHIQUE D'UN OBJET ET AGENCEMENT POUR METTRE EN OEUVRE LEDIT PROCÉDÉ

(30) Priorität: 18.08.2020 DE 102020121617
(43) Veröffentlichungstag der Anmeldung: 11.01.2023
(73) Patentinhaber: Koenig & Bauer AG, 97080 Würzburg (DE)
(72) Erfinder: DIEDERICHS, Carsten, 32657 Lemgo (DE); HOHMANN, Ingmar, 33161 Hövelhof (DE); LÜDER, Christian, 33729 Bielefeld (DE)
(74) Vertreter: Koenig & Bauer AG
(86) Internationale Anmeldenummer: PCT/EP2021/064640
(87) Internationale Veröffentlichungsnummer: WO 2022/037815

(56) Entgegenhaltungen:
- EP-A1- 3 312 595
- DE-U1-202015 104 751

## Beschreibung

Die Erfindung betrifft ein Verfahren zur fotografischen Abbildung eines Objektes gemäß dem Oberbegriff des Anspruches 1 und eine Druckmaschine mit einer eine Steuereinheit aufweisenden Anordnung zur Ausführung dieses Verfahrens nach Anspruch 8.

Durch die EP 3 312 595 A1 ist bekannt, mit einer Kamera zu einem ersten Zeitpunkt eine erste Aufnahme eines ersten Abschnitts einer Materialbahn zu erstellen und anschließend mit der Kamera zu einem zweiten Zeitpunkt eine zweite Aufnahme eines zweiten Abschnitts der Materialbahn zu erstellen, wobei die Materialbahn für die erste Aufnahme mit einer ersten Beleuchtungsart und für die zweite Aufnahme mit einer zweiten Beleuchtungsart beleuchtet wird.

Durch die DE 20 2015 104 751 U1 ist eine Inspektionsvorrichtung zur Inspektion von auf einer durch eine Führungsvorrichtung geführten Materialbahn angeordneten Erzeugnissen bekannt, wobei die Materialbahn eine Vorderseite, auf der die Erzeugnisse anordenbar sind, und eine der Vorderseite gegenüberliegend angeordnete Rückseite aufweist, mit einer Kamera mit einem Fokusbereich, einer ersten Beleuchtungseinrichtung, einer zweiten Beleuchtungseinrichtung, und einer Auslöseeinrichtung zum Auslösen einer Bildaufnahmefunktion der Kamera, einer Beleuchtungsfunktion der ersten Beleuchtungseinrichtung und einer Beleuchtungsfunktion der zweiten Beleuchtungseinrichtung, wobei die Auslöseeinrichtung dazu eingerichtet ist, dass bei einer Anordnung
- der Kamera derart an die Materialbahn, dass die Materialbahn in dem Fokusbereich führbar ist und die Vorderseite der Materialbahn in dem Fokusbereich der Kamera zugewandt ist,
- der ersten Beleuchtungseinrichtung derart, dass in dem Fokusbereich die Vorderseite durch die erste Beleuchtungseinrichtung beleuchtbar ist, und
- der zweiten Beleuchtungseinrichtung derart, dass in dem Fokusbereich die Rückseite durch die zweite Beleuchtungseinrichtung beleuchtbar ist,
die Bildaufnahmefunktion der Kamera, die Beleuchtungsfunktion der ersten Beleuchtungseinrichtung und die Beleuchtungsfunktion der zweiten Beleuchtungseinrichtung derart auslösbar sind, dass bei einem Auslösen der Bildaufnahmefunktion der Kamera der Fokusbereich durch mindestens eine aktive Beleuchtungseinrichtung aus der Gruppe der ersten Beleuchtungseinrichtung und der zweiten Beleuchtungseinrichtung beleuchtbar ist.

Durch die DE 20 2014 105 096 U1 ist eine Kamera zur Erfassung von Objekten in einem Erfassungsbereich bekannt, wobei die Kamera einen Lichtempfänger mit einer Vielzahl von Lichtempfangspixeln, eine multispektrale Beleuchtungseinrichtung zum Beleuchten des Erfassungsbereichs in unterschiedlichen Spektralbändern und eine Auswertungseinheit aufweist, die dafür ausgebildet ist, den Erfassungsbereich mittels der Beleuchtungseinrichtung während verschiedener Beleuchtungszeitfenster in einem jeweils anderen Spektralband zu beleuchten und mit dem Lichtempfänger in Aufnahmezeitfenstern Bilddaten aus dem Erfassungsbereich aufzunehmen, wobei der Lichtempfänger als Doppelzeilenempfänger mit einer ersten Zeile und einer zweiten Zeile von Lichtempfangspixeln ausgebildet ist und wobei die Aufnahmezeitfenster für die erste Zeile und die zweite Zeile unterschiedlich sind, wobei die Beleuchtungseinrichtung für die Beleuchtung vorzugsweise in mindestens zwei der folgenden Spektralbänder ausgebildet ist: rot, grün, blau, sichtbar, infrarot, ultraviolett und wobei die Auswertungseinheit dafür ausgebildet ist, die Aufnahmezeitfenster für zumindest eine Zeile jeweils über zwei Beleuchtungszeitfenster festzulegen, so dass eine Aufnahme jeweils während der Beleuchtung zuerst mit einem und dann mit einem anderen Spektralband erfolgt.

Durch die DE 10 2013 223 852 A1 ist ein Verfahren zur Erstellung von mindestens zwei Bildern eines Messobjekts mit einer Kameravorrichtung bekannt, wobei in einem ersten Aufnahmehauptschritt eine Beleuchtungseinrichtung zur Beleuchtung des Messobjekts in einem Messbereich in einer ersten Beleuchtungsart angesteuert wird und eine Bildaufnahmeeinrichtung, die einen Flächensensor umfasst, der mehrere Sensorzeilen aufweist, wobei jede der Sensorzeilen eine Bildzeile einer Gegenstandszeile aufnehmen kann, zur Aufnahme eines ersten Messbilds mit mindestens n Sensorzeilen angesteuert wird, wobei das erste Messbild für jede der mindestens n Sensorzeilen eine erste Bildzeile aufweist, wobei nachfolgend in einem ersten Bewegungshauptschritt eine Bewegungseinrichtung zur relativen Verschiebung des Messobjekts und der Bildaufnahmeeinrichtung um einen Weg, der einer Gegenstandszeile oder einer Mehrzahl der Gegenstandszeilen entspricht, angesteuert wird und wobei nachfolgend in einem zweiten Aufnahmehauptschritt die Beleuchtungseinrichtung zur Beleuchtung des Messbereichs in einer zweiten Beleuchtungsart angesteuert wird und die Bildaufnahmeeinrichtung zur Aufnahme eines zweiten Messbilds mit den gleichen mindestens n Sensorzeilen angesteuert wird, wobei das zweite Messbild für jede der mindestens n Sensorzeilen eine zweite Bildzeile aufweist, wobei nachfolgend in einem zweiten Bewegungshauptschritt die Bewegungseinrichtung zur relativen Verschiebung des Messobjekts um einen Weg, der einer oder einer Mehrzahl der Gegenstandszeilen entspricht, angesteuert wird und wobei nachfolgend eine Sequenz umfassend zumindest den ersten Aufnahmehauptschritt, den ersten Bewegungshauptschritt, den zweiten Aufnahmehauptschritt und den zweiten Bewegungshauptschritt wiederholt angesteuert wird, und wobei eine Auswerteeinrichtung auf Basis der ersten Messbilder ein erstes Bild mit der ersten Beleuchtungsart und auf Basis der zweiten Messbilder ein zweites Bild des Messobjekts mit der zweiten Beleuchtungsart erstellt.

Durch die EP 1 607 220 A2 ist ein Inline-Inspektionssystem in einer Druckmaschine bekannt, wobei das Inline-Inspektionssystem eine Zeilenkamera und eine Beleuchtungseinrichtung aufweist, wobei die Zeilenkamera z. B. einen UV-Filter als Objektivschutz aufweist und die Beleuchtungseinrichtung eine Gruppe von weißes Licht emittierenden Lichtquellen aufweisen kann.

Der Erfindung liegt die Aufgabe zugrunde, ein Verfahren zur fotografischen Abbildung eines Objektes und eine Druckmaschine mit einer eine Steuereinheit aufweisenden Anordnung zur Ausführung dieses Verfahrens zu schaffen, mit denen ein Objekt in einem industriellen Produktionsprozess maschinell und rationell auf Einhaltung einer bestimmten Qualität prüfbar ist.

Die Aufgabe wird erfindungsgemäß durch ein Verfahren mit den Merkmalen des Anspruches 1 und durch eine Druckmaschine mit einer eine Steuereinheit aufweisenden Anordnung mit den Merkmalen des Anspruches 8 gelöst. Die jeweils abhängigen Ansprüche betreffen jeweils vorteilhafte Ausgestaltungen und/oder Weiterbildungen der gefundenen Lösung.

Die mit der Erfindung erzielbaren Vorteile bestehen insbesondere darin, dass in einem industriellen drucktechnischen Produktionsprozess insbesondere von Wertdokumenten, vorzugsweise von Banknoten, deren Prüfung auf Einhaltung einer bestimmten Qualität und/oder auf Echtheit verbessert wird. Besonders vorteilhaft ist, dass unterschiedliche optische Eigenschaften eines Wertdokumentes oder eines Druckbildes, welches außer mindestens einem Bildelement, das mit einer für das menschliche Auge sichtbaren Druckfarbe gedruckt wird, mindestens ein weiteres Bildelement aufweist, das mittels einer UV-reaktiven oder mit einer IR-reaktiven Druckfarbe gedruckt wird, und/oder welches im betreffenden Druckbild und/oder im Bedruckstoff jeweils mindestens ein UV-reaktives oder ein IR-reaktives Sicherheitsmerkmal aufweist, inline, d. h. während einer laufenden Produktion gemeinsam geprüft werden können.

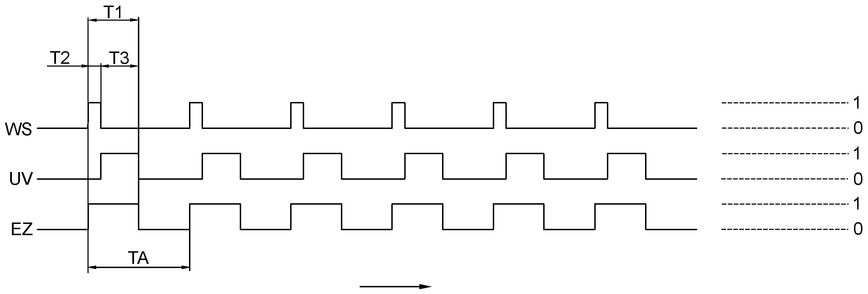

Ein Ausführungsbeispiel der Erfindung ist in der Zeichnung dargestellt und wird im Folgenden näher beschrieben.

Die einzige Figur zeigt ein Diagramm für die Steuerung einer Belichtungseinrichtung.

Wertdokumente wie z. B. Banknoten werden i. d. R. in einem industriellen drucktechnischen Produktionsprozess dadurch hergestellt, dass in einer Druckmaschine, vorzugsweise in einer Rotationsdruckmaschine, ein z. B. bogenförmiger Bedruckstoff mit mindestens einem Druckbild, vorzugsweise mit mehreren Druckbildern, insbesondere mit mehreren gleichen Druckbildern bedruckt wird. Dabei kann das betreffende Druckbild sowohl solche Bildelemente aufweisen, die mit einer für das menschliche Auge sichtbaren Druckfarbe gedruckt werden, als auch Bildelemente, die mit einer UV-reaktiven Druckfarbe oder mit einer IR-reaktiven Druckfarbe gedruckt werden. Überdies können insbesondere Wertdokumente mindestens ein UV-reaktives Sicherheitsmerkmal oder ein IR-reaktives Sicherheitsmerkmal z. B. im Druckbild und/oder im Bedruckstoff des betreffenden Wertdokumentes aufweisen. Ein Bildelement, das mit einer UV-reaktiven Druckfarbe gedruckt worden ist, und/oder ein UV-reaktives Sicherheitsmerkmal können jedoch durch eine Belichtung mit Weißlicht fotografisch nicht abgebildet werden. Ein UV-reaktives Bildelement und/oder ein UV-reaktives Sicherheitsmerkmal erfordern für ihr Sichtbarwerden für das menschliche Auge jeweils eine äußere energetische Anregung, insbesondere durch eine Bestrahlung mit UV-Licht, so dass ein solches Bildelement oder ein solches Sicherheitsmerkmal aufgrund von Fluoreszenz oder Phosphoreszenz für das menschliche Auge sichtbar wird. Auch ein IR-reaktives Bildelement oder ein IR-reaktives Sicherheitsmerkmal lässt sich nicht ohne Weiteres mit einer für Weißlichtaufnahmen ausgelegten Kamera fotografisch abbilden. Denn auch ein IR-reaktives Bildelement oder ein IR-reaktives Sicherheitsmerkmal ist bei einer Belichtung allein mit Weißlicht für das menschliche Auge zunächst einmal nicht sichtbar. Erst durch eine Belichtung mit IR-Licht löst ein IR-reaktives Bildelement oder ein IR-reaktives Sicherheitsmerkmal eine mit einer für Weißlichtaufnahmen ausgelegten Kamera fotografisch erfassbare Reaktion aus, indem das IR-reaktive Bildelement oder das IR-reaktive Sicherheitsmerkmal das einfallende IR-Licht i.d.R. jeweils absorbieren und/oder reflektieren und aufgrund dessen dann unter Weißlicht insbesondere im Vergleich zu ihrer jeweiligen unmittelbaren Umgebung jeweils als eine Dunkelstelle erscheinen.

Um in einem industriellen drucktechnischen Produktionsprozess maschinell und rationell die Einhaltung einer bestimmten Qualität dieser Druckbilder zu überprüfen, wird i. d. R. jedes auf den Bedruckstoff aufgedruckte Druckbild noch während des Transports des Bedruckstoffes durch die Druckmaschine, d. h. also inline fotografisch abgebildet. Diese fotografische Abbildung des mindestens einen Druckbildes erfolgt an einer ortsfesten Position innerhalb der Druckmaschine insbesondere mittels mindestens einer als Zeilenkamera ausgebildeten Kamera in einer Sequenz von jeweils mindestens eine Bildzeile aufweisenden Aufnahmeperioden, wobei die mindestens eine Zeilenkamera innerhalb jeder Aufnahmeperiode von einer Steuereinheit für eine bestimmte Einschaltzeit eingeschaltet wird. Dabei bildet jede Bildzeile jeweils einen sich quer zur Transportrichtung des Bedruckstoffes erstreckenden streifenförmigen Abschnitt des Druckbildes fotografisch ab. Jeder streifenförmige Abschnitt des betreffenden fotografisch abzubildenden Druckbildes wird mit einer sich quer zur Transportrichtung des Bedruckstoffes erstreckenden von der Steuereinheit gesteuerten Belichtungseinrichtung für eine von der jeweiligen Einschaltzeit der mindestens einen Zeilenkamera abhängigen Belichtungszeit belichtet. In einer bevorzugten Ausführung sind die mindestens eine Zeilenkamera zur Erstellung der fotografischen Abbildung und die mit der betreffenden Zeilenkamera zusammenwirkende Belichtungseinrichtung auf einen Transportweg des durch die Druckmaschine transportierten und dort in mindestens einem Druckwerk bedruckten Bedruckstoff gerichtet und auf derselben Seite des Bedruckstoffes angeordnet, wobei der die aufgedruckten Druckbilder aufweisende Bedruckstoff auf einer Transporteinrichtung aufliegend transportiert wird. Diese Transporteinrichtung ist z. B. als ein Transportband oder als ein Transportzylinder ausgebildet, wobei der die aufgedruckten Druckbilder aufweisende Bedruckstoff auf der Mantelfläche des rotierenden Transportzylinders aufliegend transportiert wird. Die betreffende Zeilenkamera, die Belichtungseinrichtung und die Steuereinheit sind jeweils z. B. Komponenten eines zur Druckmaschine gehörenden Inspektionssystems.

Erfindungsgemäß wird als Druckbild ein solches verwendet, welches außer mindestens einem Bildelement, das mit einer für das menschliche Auge sichtbaren Druckfarbe gedruckt wird, mindestens ein weiteres Bildelement aufweist, das mittels einer UV-reaktiven Druckfarbe oder mit einer IR-reaktiven Druckfarbe gedruckt wird, und/oder welches mindestens ein UV-reaktives oder ein IR-reaktives Sicherheitsmerkmal aufweist, wobei jeder streifenförmige Abschnitt des fotografisch abzubildenden Druckbildes innerhalb der ihn fotografisch abbildenden Aufnahmeperiode während der Einschaltzeit der mindestens einen Zeilenkamera asynchron, also ungleichzeitig für die Dauer einer ersten Belichtungszeit mit Weißlicht und für die Dauer einer zweiten Belichtungszeit im Fall eines UV-reaktiven Bildelementes oder eines UV-reaktiven Sicherheitsmerkmals jeweils mit ultraviolettem Licht, d. h. mit UV-Licht, oder im Fall eines IR-reaktiven Bildelementes oder eines IR-reaktiven Sicherheitsmerkmals jeweils mit IR-Licht belichtet wird. Dabei können die Dauer der ersten Belichtungszeit mit Weißlicht und/oder die Dauer der zweiten Belichtungszeit mit UV-Licht oder mit IR-Licht z. B. von oder zumindest an der mit der betreffenden Zeilenkamera zusammenwirkenden Steuereinheit innerhalb eines zuvor festgelegten Wertebereiches variabel eingestellt werden. Beispielsweise ist die Dauer der ersten Belichtungszeit mit Weißlicht kürzer eingestellt als die Dauer der zweiten Belichtungszeit mit UV-Licht oder mit IR-Licht. So beträgt die Dauer der ersten Belichtungszeit mit Weißlicht z. B. weniger als die Hälfte der Dauer der zweiten Belichtungszeit mit UV-Licht oder mit IR-Licht. In jedem Fall wird jeder, d. h. ein und derselbe streifenförmige Abschnitt des fotografisch abzubildenden Druckbildes innerhalb der ihn fotografisch abbildenden Aufnahmeperiode jeweils mit mindestens zwei Lichtarten belichtet. Insbesondere ist vorgesehen, dass jeder streifenförmige Abschnitt des fotografisch abzubildenden Druckbildes innerhalb der ihn fotografisch abbildenden Aufnahmeperiode von der Belichtungseinrichtung während der Einschaltzeit der mindestens einen Zeilenkamera alternierend mit Weißlicht und mit UV-Licht oder mit IR-Licht belichtet wird.

In einer vorteilhaften Ausbildung der gefundenen Lösung wird zur Einschaltung der Belichtungszeit mit Weißlicht und/oder zur Einschaltung der Belichtungszeit mit UV-Licht oder mit IR-Licht ein in der Druckmaschine angeordneter mit der Steuereinheit zumindest datentechnisch verbundener Encoder oder Absolutwertgeber verwendet, so dass die Belichtungszeit mit Weißlicht und/oder die Belichtungszeit mit UV-Licht oder mit IR-Licht jeweils mit einem durch den Encoder oder Absolutwertgeber gegebenen definierten Ortsbezug zum durch die Druckmaschine transportierten Bedruckstoff erfolgt.

Es können auch zwei in der Druckmaschine z. B. parallel vorzugsweise quer zur Transportrichtung des Bedruckstoffes nebeneinander angeordnete Zeilenkameras verwendet werden, wobei jeder streifenförmige Abschnitt des fotografisch abzubildenden Druckbildes innerhalb der ihn fotografisch abbildenden Aufnahmeperiode von der Belichtungseinrichtung während einer Einschaltzeit der ersten Zeilenkamera für die Dauer der ersten Belichtungszeit mit Weißlicht und zeitversetzt, d. h. zu einer anderen Zeit während einer Einschaltzeit der zweiten Zeilenkamera für die Dauer der zweiten Belichtungszeit mit UV-Licht oder mit IR-Licht belichtet wird.

Wird mit nur einer einzigen Zeilenkamera gearbeitet, muss zur fotografischen Abbildung des betreffenden Druckbildes die doppelte Anzahl an Bildzeilen aufgenommen werden. Das in der betreffenden Aufnahmeperiode aufgenommene Weißlichtbild und das UV-Lichtbild oder IR-Lichtbild werden dadurch ineinander verschachtelt und müssen anschließend durch ein Zeilen-Demultiplex-Verfahren voneinander separiert werden. Wird mit zwei vorzugsweise parallel, d. h. quer zur Transportrichtung des Bedruckstoffes nebeneinander angeordneten Zeilenkameras gearbeitet, ist dies nicht notwendig. Allerdings müssen die Zeitpunkte der Bildzeilenaufnahme an die jeweilige Belichtungseinrichtung, d. h. an die jeweils zeitversetzte Belichtung mit Weißlicht und mit UV-Licht oder IR-Licht angepasst werden.

Die Figur zeigt ein Diagramm für die Steuerung einer zur Ausführung des vorgeschlagenen Verfahrens verwendeten Belichtungseinrichtung. Der in einer mindestens ein Druckwerk aufweisenden Druckmaschine z. B. auf der Mantelfläche eines Transportzylinders angeordnete, z. B. als ein Druckbogen ausgebildete Bedruckstoff wird durch einen streifenförmigen Aufnahmebereich der mindestens einen Zeilenkamera geführt, wobei diese mindestens eine Zeilenkamera in der Druckmaschine in Transportrichtung des Bedruckstoffes nach dem betreffenden diesen Bedruckstoff bedruckenden Druckwerk ortsfest angeordnet ist. Die Transportrichtung des Bedruckstoffes ist in der Figur durch einen Richtungspfeil angedeutet. Die fotografische Abbildung des mindestens einen auf dem Bedruckstoff aufgedruckten Druckbildes erfolgt in einer Sequenz von sich quer zur Transportrichtung des Bedruckstoffes erstreckenden Bildzeilen, wobei die die betreffende Bildzeile aufnehmende Zeilenkamera von ihrer zugehörigen Steuereinheit für die Dauer T1 einer bestimmten z. B. von der Transportgeschwindigkeit des Bedruckstoffes abhängigen Einschaltzeit EZ eingeschaltet wird. Diese Einschaltzeit EZ der betreffenden Zeilenkamera dauert maximal solange wie eine Aufnahmeperiode TA dieser von der Steuereinheit gesteuerten Zeilenkamera. In jeder Aufnahmeperiode TA bildet die betreffende Zeilenkamera jeweils einen sich quer zur Transportrichtung des Bedruckstoffes erstreckenden streifenförmigen Abschnitt des Druckbildes fotografisch ab.

Wie aus der Figur ersichtlich ist, erfolgt während der Dauer T1 der Einschaltzeit EZ der betreffenden Zeilenkamera eine Belichtung des sich quer zur Transportrichtung des Bedruckstoffes erstreckenden streifenförmigen Abschnittes des Druckbildes für die Dauer T2 einer ersten Belichtungszeit WS mit Weißlicht und in dem dargestellten Beispiel für die Dauer T3 einer zweiten Belichtungszeit UV mit UV-Licht. Die zeitliche Abfolge der jeweiligen Belichtung kann auch umgekehrt erfolgen, als in der Figur dargestellt, d. h. dass die Belichtung mit UV-Licht zeitlich vor der Belichtung mit Weißlicht erfolgt. In dem in der Figur dargestellten Beispiel erfolgen die Belichtung mit Weißlicht und die Belichtung mit UV-Licht intermittierend, vorzugsweise alternierend. Entsprechendes gilt auch für die Ausführungsvariante mit IR-Licht. Die jeweilige Belichtung erfolgt jeweils insbesondere durch eine Belichtungseinrichtung, in welcher die unterschiedliche Lichtarten emittierenden Lichtquellen integriert, d. h. in einem selben Gehäuse jeweils auf den Bedruckstoff gerichtet angeordnet sind, wobei in der bevorzugten Ausführung diese verschiedenen Lichtquellen zudem in einer Linienanordnung, d. h. auf einer sich quer zur Transportrichtung des Bedruckstoffes erstreckenden Geraden angeordnet sind, so dass die Belichtungseinrichtung als eine Linienbelichtungseinrichtung ausgebildet ist. Die in der Belichtungseinrichtung angeordneten Lichtquellen sind vorzugsweise jeweils von der Steuereinheit gesteuert. Dabei erfolgt die Steuerung dieser Lichtquellen z. B. in Abhängigkeit von einem Signal eines z. B. am Transportzylinder angeordneten Encoders oder Absolutwertgebers, wobei der Transportzylinder durch seine Rotation den auf seiner Mantelfläche aufliegenden Bedruckstoff durch den sich in Axialrichtung dieses Transportzylinders erstreckenden streifenförmigen Aufnahmebereich der mindestens einen Zeilenkamera transportiert. Die Lichtquellen der Belichtungseinrichtung sind vorzugsweise jeweils als LEDs oder Laserdioden ausgebildet.

Somit ergibt sich auch eine Anordnung zur Ausführung des vorgenannten Verfahrens, aufweisend mindestens eine in einer Druckmaschine angeordnete Zeilenkamera und eine Belichtungseinrichtung, wobei die betreffende Zeilenkamera und die Belichtungseinrichtung auf einen Transportweg eines durch die Druckmaschine transportierten und dort in mindestens einem Druckwerk bedruckten Bedruckstoff gerichtet angeordnet sind, wobei die Belichtungseinrichtung in einem selben Gehäuse und vorzugsweise auf einer sich quer zur Transportrichtung des Bedruckstoffes erstreckenden Geraden insbesondere in einer alternierenden Anordnung außer einer Lichtquelle zur Belichtung des Bedruckstoffes mit Weißlicht zusätzlich eine Lichtquelle zur Belichtung des Bedruckstoffes mit UV-Licht und/oder eine Lichtquelle zur Belichtung des Bedruckstoffes mit IR-Licht aufweist, wobei die Lichtquelle zur Belichtung des Bedruckstoffes mit Weißlicht und die Lichtquelle zur Belichtung des Bedruckstoffes mit UV-Licht und/oder die Lichtquelle zur Belichtung des Bedruckstoffes mit IR-Licht von einer Steuereinheit asynchron und intermittierend aktiviert sind. Zudem ist die Steuereinheit z. B. durch Ausführung eines entsprechenden Steuerungsprogramms derart ausgebildet, dass sie die betreffende Zeilenkamera und die Belichtungseinrichtung jeweils in Abhängigkeit von einem Signal eines in der Druckmaschine angeordneten Encoders oder Absolutwertgebers steuert.

### Bezugszeichenliste

- EZ: Einschaltzeit der Zeilenkamera
- WS: Belichtungszeit mit Weißlicht
- UV: Belichtungszeit mit UV-Licht
- TA: Aufnahmeperiode
- T1: Dauer der Einschaltzeit der Zeilenkamera
- T2: Dauer der Belichtungszeit mit Weißlicht
- T3: Dauer der Belichtungszeit mit UV-Licht

## Patentansprüche

1. Verfahren zur fotografischen Abbildung eines Objektes, wobei die fotografische Abbildung des Objektes während seines Transports an einer ortsfesten Position mittels einer Zeilenkamera in einer Sequenz von jeweils mindestens eine Bildzeile aufweisenden Aufnahmeperioden (TA) erfolgt, wobei die Zeilenkamera innerhalb jeder Aufnahmeperiode (TA) von einer Steuereinheit für die Dauer (T1) einer bestimmten Einschaltzeit (EZ) eingeschaltet wird, wobei jede Bildzeile jeweils einen sich quer zur Transportrichtung des Objektes erstreckenden streifenförmigen Abschnitt des Objektes fotografisch abbildet, wobei jeder streifenförmige Abschnitt des fotografisch abzubildenden Objektes mit einer sich quer zu seiner Transportrichtung erstreckenden von der Steuereinheit gesteuerten auf derselben Seite des Bedruckstoffes wie die Zeilenkamera angeordneten Belichtungseinrichtung für eine Belichtungszeit belichtet wird, wobei jeder streifenförmige Abschnitt des fotografisch abzubildenden Objektes innerhalb der ihn fotografisch abbildenden Aufnahmeperiode (TA) während der Dauer (T1) der Einschaltzeit (EZ) der Zeilenkamera mit Weißlicht oder mit UV-Licht oder mit IR-Licht belichtet wird, wobei als Objekt ein in einer Druckmaschine auf einen Bedruckstoff aufgebrachtes Druckbild verwendet wird, wobei die fotografische Aufnahme des Druckbildes während des Transports des Bedruckstoffes durch die Druckmaschine erfolgt, wobei das Druckbild außer mindestens einem Bildelement, das mit einer für das menschliche Auge sichtbaren Druckfarbe gedruckt wird, mindestens ein weiteres Bildelement aufweist, wobei dieses weitere Bildelement mittels einer UV-reaktiven Druckfarbe oder mittels einer IR-reaktiven Druckfarbe gedruckt wird, und/oder wobei das Druckbild mindestens ein UV-reaktives Sicherheitsmerkmal oder ein IR-reaktives Sicherheitsmerkmal aufweist, **dadurch gekennzeichnet, dass** die Belichtungseinrichtung für eine von der Dauer (T1) der Einschaltzeit (EZ) der Zeilenkamera abhängigen Belichtungszeit belichtet wird, wobei jeder streifenförmige Abschnitt des fotografisch abzubildenden Objektes innerhalb der ihn fotografisch abbildenden Aufnahmeperiode (TA) während der Dauer (T1) der Einschaltzeit (EZ) der Zeilenkamera asynchron für die Dauer (T2) einer ersten Belichtungszeit (WS) mit Weißlicht und für die Dauer (T3) einer zweiten Belichtungszeit (UV) entweder mit UV-Licht oder mit IR-Licht belichtet wird, wobei jeder streifenförmige Abschnitt des fotografisch abzubildenden Druckbildes innerhalb der ihn fotografisch abbildenden Aufnahmeperiode (TA) von der Belichtungseinrichtung während der Dauer (T1) der Einschaltzeit (EZ) der Zeilenkamera alternierend mit Weißlicht und entweder mit UV-Licht oder mit IR-Licht belichtet wird, wobei jeder streifenförmige Abschnitt des fotografisch abzubildenden Druckbildes innerhalb der ihn fotografisch abbildenden Aufnahmeperiode (TA) während der Dauer (T1) der Einschaltzeit (EZ) der Zeilenkamera für die Dauer (T3) der zweiten Belichtungszeit (UV) im Fall eines UV-reaktiven Bildelementes oder eines UV-reaktiven Sicherheitsmerkmals jeweils mit UV-Licht oder im Fall eines IR-reaktiven Bildelementes oder eines IR-reaktiven Sicherheitsmerkmals jeweils mit IR-Licht belichtet wird.

2. Verfahren nach Anspruch 1, **dadurch gekennzeichnet, dass** die Dauer (T2) der ersten Belichtungszeit (WS) mit Weißlicht und/oder die Dauer (T3) der zweiten Belichtungszeit (UV) entweder mit UV-Licht oder mit IR-Licht von der Steuereinheit eingestellt wird bzw. werden, wobei die Dauer (T2) der ersten Belichtungszeit (WS) mit Weißlicht und/oder die Dauer (T3) der zweiten Belichtungszeit (UV) entweder mit UV-Licht oder mit IR-Licht innerhalb eines zuvor festgelegten Wertebereiches variabel einstellbar sind.

3. Verfahren nach Anspruch 1 oder 2, **dadurch gekennzeichnet, dass** die Dauer (T2) der ersten Belichtungszeit (WS) mit Weißlicht kürzer als die Dauer (T3) der zweiten Belichtungszeit (UV) entweder mit UV-Licht oder mit IR-Licht eingestellt wird.

4. Verfahren nach Anspruch 1 oder 2 oder 3, **dadurch gekennzeichnet, dass** zur Einschaltung der Belichtungszeit (WS) mit Weißlicht und/oder zur Einschaltung der Belichtungszeit (UV) mit UV-Licht oder mit IR-Licht ein in der Druckmaschine angeordneter mit der Steuereinheit zumindest datentechnisch verbundener Encoder oder Absolutwertgeber verwendet wird, so dass die Belichtungszeit (WS) mit Weißlicht und/oder die Belichtungszeit (UV) entweder mit UV-Licht oder mit IR-Licht jeweils mit einem durch den Encoder oder Absolutwertgeber gegebenen definierten Ortsbezug zum durch die Druckmaschine transportierten Bedruckstoff erfolgt.

5. Verfahren nach Anspruch 1 oder 2 oder 3 oder 4, **dadurch gekennzeichnet, dass** bei Verwendung der nur einen einzigen Zeilenkamera zur fotografischen Abbildung des betreffenden Druckbildes die doppelte Anzahl an Bildzeilen aufgenommen werden, wobei dadurch in der betreffenden Aufnahmeperiode (TA) ein Weißlichtbild und ein UV-Lichtbild oder IR-Lichtbild ineinander verschachtelt aufgenommen und anschließend durch ein Zeilen-Demultiplex-Verfahren voneinander separiert werden.

6. Verfahren nach Anspruch 1 oder 2 oder 3 oder 4 oder 5 , **dadurch gekennzeichnet, dass** die fotografische Abbildung des Druckbildes erfolgt, während der Bedruckstoff in der Druckmaschine auf einem Transportband oder auf der Mantelfläche eines Transportzylinders aufliegt.

7. Verfahren nach Anspruch 1 oder 2 oder 3 oder 4 oder 5 oder 6 , **dadurch gekennzeichnet, dass** es zur Prüfung von auf den Bedruckstoff gedruckten jeweils ein Wertdokument oder eine Banknote bildenden Druckbildern verwendet wird.

8. Druckmaschine mit einer eine Steuereinheit aufweisenden Anordnung, wobei die Steuereinheit dieser Anordnung dazu ausgebildet ist, das Verfahren nach einem der Ansprüche 1 bis 7 auszuführen, wobei die Anordnung eine in der Druckmaschine angeordnete Zeilenkamera und eine Belichtungseinrichtung aufweist, wobei die Zeilenkamera und die Belichtungseinrichtung auf einen Transportweg eines durch die Druckmaschine transportierten und dort in mindestens einem Druckwerk bedruckten Bedruckstoff gerichtet und auf derselben Seite dieses Bedruckstoffes angeordnet sind, **dadurch gekennzeichnet, dass** die Belichtungseinrichtung in einem selben Gehäuse außer einer Lichtquelle zur Belichtung des Bedruckstoffes mit Weißlicht zusätzlich eine Lichtquelle zur Belichtung des Bedruckstoffes mit UV-Licht und/oder eine Lichtquelle zur Belichtung des Bedruckstoffes mit IR-Licht aufweist, wobei die Lichtquelle zur Belichtung des Bedruckstoffes mit Weißlicht und die Lichtquelle zur Belichtung des Bedruckstoffes mit UV-Licht und/oder die Lichtquelle zur Belichtung des Bedruckstoffes mit IR-Licht von der Steuereinheit während der Dauer (T1) der Einschaltzeit (EZ) der Zeilenkamera asynchron und intermittierend aktiviert sind.

9. Druckmaschine nach Anspruch 8, **dadurch gekennzeichnet, dass** die Steuereinheit derart ausgebildet ist, dass sie die betreffende Zeilenkamera und die Belichtungseinrichtung jeweils in Abhängigkeit von einem Signal eines in der Druckmaschine angeordneten Encoders oder Absolutwertgebers steuert.

10. Druckmaschine nach Anspruch 8 oder 9, **dadurch gekennzeichnet, dass** eine den Bedruckstoff durch die Druckmaschine transportierende Transporteinrichtung vorgesehen ist, wobei diese Transporteinrichtung als ein Transportband oder als ein Transportzylinder ausgebildet ist.

11. Druckmaschine nach Anspruch 8 oder 9 oder 10, **dadurch gekennzeichnet, dass** die Lichtquellen der Belichtungseinrichtung jeweils auf einer sich quer zur Transportrichtung des Bedruckstoffes erstreckenden Geraden angeordnet sind.

12. Druckmaschine nach Anspruch 8 oder 9 oder 10 oder 11, **dadurch gekennzeichnet, dass** die Lichtquellen der Belichtungseinrichtung jeweils als LEDs oder Laserdioden ausgebildet sind.

## Claims

1. Method for photographically mapping an object, the photographic mapping of the object taking place during its transport at a fixed position by means of a line camera in a sequence of recording periods (TA) that each include at least one image line; the line camera being switched on within each recording period (TA) by a control unit for a duration (T1) of a defined on-time (EZ); each image line photographically mapping a respective strip-shaped portion of the object extending transversely to the transport direction of the object; each strip-shaped portion of the object to be photographically mapped being exposed for an exposure time by an exposure device, which extends transversely to the transport direction of the object, is controlled by the control unit and is located on the same side of the printing substrate as the line camera; each strip-shaped portion of the object to be photographically mapped being exposed, within the recording period (TA) photographically mapping the portion, during the duration (T1) of the on-time (EZ) of the line camera to white light or to UV light or to IR light; a print image that is applied onto a printing substrate in a printing press being used as the object; the photographic recording of the print image taking place while the printing substrate is being transported through the printing press; the print image, in addition to at least one image element that is printed with a printing ink visible to the human eye, including at least one further image element; this further image element being printed by means of a UV-reactive printing ink or by means of an IR-reactive printing ink, and/or the print image including at least one UV-reactive security feature or one IR-reactive security feature, **characterized in that** the exposure device is exposed for an exposure time that is dependent on the duration (T1) of the on-time (EZ) of the line camera; each strip-shaped portion of the object to be photographically mapped being exposed, within the recording period (TA) photographically mapping the portion, during the duration (T1) of the on-time (EZ) of the line camera asynchronously for the duration (T2) of a first exposure time (WS) to white light and for the duration (T3) of a second exposure time (UV) either to UV light or to IR light; each strip-shaped portion of the print image to be photographically mapped being alternately exposed by the exposure device, within the recording period (TA) photographically mapping the portion, to white light and either to UV light or to IR light during the duration (T1) of the on-time (EZ) of the line camera; and each strip-shaped portion of the print image to be photographically mapped being in each case exposed, within the recording period (TA) photographically mapping the portion, during the duration (T1) of the on-time (EZ) of the line camera for the duration (T3) of the second exposure time (UV) in each case to UV light, in the case of a UV-reactive image element or a UV-reactive security feature, or in each case to IR light, in the case of an IR-reactive image element or an IR-reactive security feature.

2. Method according to claim 1, **characterized in that** the duration (T2) of the first exposure time (WS) to white light and/or the duration (T3) of the second exposure time (UV) either to UV light or to IR light is or are set by the control unit; the duration (T2) of the first exposure time (WS) to white light and/or the duration (T3) of the second exposure time (UV) either to UV light or to IR light being variably settable within a previously established value range.

3. Method according to claim 1 or 2, **characterized in that** the duration (T2) of the first exposure time (WS) to white light is set to be shorter than the duration (T3) of the second exposure time (UV) either to UV light or to IR light.

4. Method according to claim 1 or 2 or 3, **characterized in that** an encoder or an absolute encoder, which is arranged in the printing press and has at least a data connection to the control unit, is used to switch on the exposure time (WS) to white light and/or to switch on the exposure time (UV) to UV light or to IR light, so that the exposure time (WS) to white light and/or the exposure time (UV) either to UV light or to IR light in each case takes place with a defined geographical relationship, as given by the encoder or absolute encoder, with respect to the printing substrate transported through the printing press.

5. Method according to claim 1 or 2 or 3 or 4, **characterized in that**, if only a single line camera is used, twice the number of image lines are recorded to photographically map the relevant print image; as a result a white light image and a UV light image or an IR light image being recorded during the relevant recording period (TA) so as to be nested inside one another and being subsequently separated from one another by a line demultiplexing method.

6. Method according to claim 1 or 2 or 3 or 4 or 5, **characterized in that** the print image is photographically mapped while the printing substrate lies flat on a conveyor belt or on the outer cylindrical surface of a transport cylinder in the printing press.

7. Method according to claim 1 or 2 or 3 or 4 or 5 or 6, **characterized by** being used to check print images that are printed onto the printing substrate and form a respective value document or a banknote.

8. Printing press comprising a system comprising a control unit; the control unit of this system being configured to carry out the method according to any one of claims 1 to 7, the system comprising a line camera arranged in a printing press and an exposure device; the line camera and the exposure device being directed at a transport path of a printing substrate, which is being transported through the printing press and printed there in at least one printing unit, and being arranged on the same side of this printing substrate, **characterized in that** the exposure device comprises in the same housing, in addition to a light source for exposing the printing substrate to white light, additionally a light source for exposing the printing substrate to UV light and/or a light source for exposing the printing substrate to IR light; the light source for exposing the printing substrate to white light and the light source for exposing the printing substrate to UV light and/or the light source for exposing the printing substrate to IR light being asynchronously and intermittently activated by the control unit during the duration (T1) of the on-time (EZ) of the line camera.

9. Printing press according to claim 8, **characterized in that** the control unit is configured so as to control the relevant line camera and the exposure device in each case as a function of a signal of an encoder or absolute encoder arranged in the printing press.

10. Printing press according to claim 8 or 9, **characterized in that** a transport device transporting the printing substrate through the printing press is provided, this transport device being configured as a conveyor belt or as a transport cylinder.

11. Printing press according to claim 8 or 9 or 10, **characterized in that** the light sources of the exposure device are each arranged on a straight line extending transversely to the transport direction of the printing substrate.

12. Printing press according to claim 8 or 9 or 10 or 11, **characterized in that** the light sources of the exposure device are each configured as LEDs or laser diodes.

## Revendications

1. Procédé pour l'imagerie photographique d'un objet, dans lequel l'imagerie photographique de l'objet s'effectue pendant son transport au niveau d'une position fixe au moyen d'une caméra à balayage linéaire dans une séquence de périodes d'enregistrement (TA) présentant respectivement au moins une ligne d'image, dans lequel la caméra à balayage linéaire est mise en marche à l'intérieur de chaque période d'enregistrement (TA) par une unité de commande pendant la durée (T1) d'un temps de mise en marche (EZ) défini, dans lequel chaque ligne d'image reproduit de manière photographique respectivement une partie en forme de bande de l'objet s'étendant transversalement par rapport à la direction de transport de l'objet, dans lequel chaque partie en forme de bande de l'objet à reproduire de manière photographique est exposée pendant un temps d'exposition avec un dispositif d'exposition s'étendant transversalement par rapport à sa direction de transport, commandé par l'unité de commande, disposé du même côté du substrat d'impression que la caméra à balayage linéaire, dans lequel chaque partie en forme de bande de l'objet à reproduire de manière photographique à l'intérieur de la période d'enregistrement (TA) la reproduisant de manière photographique pendant la durée (T1) du temps de mise en marche (EZ) de la caméra à balayage linéaire est exposée avec une lumière blanche ou avec une lumière UV ou avec une lumière IR, dans lequel une image d'impression appliquée dans une machine à imprimer sur un substrat d'impression est utilisée en tant qu'objet, dans lequel l'enregistrement photographique de l'image d'impression pendant le transport du substrat d'impression s'effectue au moyen de la machine à imprimer, dans lequel l'image d'impression présente en plus d'au moins un élément d'image, qui est imprimé avec une encre d'impression visible pour l'œil humain, au moins un autre élément d'image, dans lequel cet autre élément d'image est imprimé au moyen d'une encre d'impression réactive aux UV ou au moyen d'une encre d'impression réactive aux IR, et/ou dans lequel l'image d'impression présente au moins une caractéristique de sécurité réactive aux UV ou une caractéristique de sécurité réactive aux IR, **caractérisé en ce que** le dispositif d'exposition est exposé pendant un temps d'exposition dépendant de la durée (T1) du temps de mise en marche (EZ) de la caméra à balayage linéaire, dans lequel chaque partie en forme de bande de l'objet à reproduire de manière photographique à l'intérieur de la période d'enregistrement (TA) la reproduisant de manière photographique pendant la durée (T1) du temps de mise en marche (EZ) de la caméra à balayage linéaire est exposée de manière asynchrone pendant la durée (T2) d'un premier temps d'exposition (WS) avec une lumière blanche et pendant la durée (T3) d'un deuxième temps d'exposition (UV) soit avec une lumière UV soit avec une lumière IR, dans lequel chaque partie en forme de bande de l'image d'impression à reproduire de manière photographique à l'intérieur de la période d'enregistrement (TA) la reproduisant de manière photographique est exposée par le dispositif d'exposition pendant la durée (T1) du temps de mise en marche (EZ) de la caméra à balayage linéaire en alternance avec une lumière blanche et soit avec une lumière UV soit avec une lumière IR, dans lequel chaque partie en forme de bande de l'image d'impression à reproduire de manière photographique à l'intérieur de la période d'enregistrement (TA) la reproduisant de manière photographique pendant la durée (T1) du temps de mise en marche (EZ) de la caméra à balayage linéaire est exposée pendant la durée (T3) du deuxième temps d'exposition (UV) dans le cas d'un élément d'image réactif aux UV ou d'une caractéristique de sécurité réactive aux UV respectivement avec une lumière UV ou dans le cas d'un élément d'image réactif aux IR ou d'une caractéristique de sécurité réactive aux IR respectivement avec une lumière IR.

2. Procédé selon la revendication 1, **caractérisé en ce que** la durée (T2) du premier temps d'exposition (WS) avec une lumière blanche et/ou la durée (T3) du deuxième temps d'exposition (UV) soit avec une lumière UV soit avec une lumière IR est ou sont réglées par l'unité de commande, dans lequel la durée (T2) du premier temps d'exposition (WS) avec une lumière blanche et/ou la durée (T3) du deuxième temps d'exposition (UV) soit avec une lumière UV soit avec une lumière IR sont réglables de manière variable à l'intérieur d'une plage de valeurs préalablement établie.

3. Procédé selon la revendication 1 ou 2, **caractérisé en ce que** la durée (T2) du premier temps d'exposition (WS) avec une lumière blanche est réglée de manière plus courte que la durée (T3) du deuxième temps d'exposition (UV) soit avec une lumière UV soit avec une lumière IR.

4. Procédé selon la revendication 1 ou 2 ou 3, **caractérisé en ce que** pour la mise en marche du temps d'exposition (WS) avec une lumière blanche et/ou pour la mise en marche du temps d'exposition (UV) avec une lumière UV ou avec une lumière IR un codeur ou transmetteur de valeur absolue disposé dans la machine à imprimer, relié au moins par une technique informatique à l'unité de commande est utilisé, de sorte que le temps d'exposition (WS) avec une lumière blanche et/ou le temps d'exposition (UV) soit avec une lumière UV soit avec une lumière IR s'effectue respectivement avec une référence de lieu définie donnée par le codeur ou transmetteur de valeur absolue par rapport au substrat d'impression transporté à travers la machine à imprimer.

5. Procédé selon la revendication 1 ou 2 ou 3 ou 4, **caractérisé en ce que** lors de l'utilisation de la une seule caméra à balayage linéaire pour l'imagerie photographique de l'image d'impression concernée le double de lignes d'image sont enregistrées, dans lequel dans la période d'enregistrement (TA) concernée une image de lumière blanche et une image de lumière UV ou une image de lumière IR sont ainsi enregistrées de manière imbriquée l'une dans l'autre et ensuite séparées l'une de l'autre par un procédé de démultiplexage linéaire.

6. Procédé selon la revendication 1 ou 2 ou 3 ou 4 ou 5, **caractérisé en ce que** l'imagerie photographique de l'image d'impression s'effectue pendant que le substrat d'impression repose dans la machine à imprimer sur une bande de transport ou sur la surface d'enveloppe d'un cylindre de transport.

7. Procédé selon la revendication 1 ou 2 ou 3 ou 4 ou 5 ou 6, **caractérisé en ce qu'**il est utilisé pour le contrôle d'images d'impression imprimées sur le substrat d'impression formant respectivement un document de valeur ou un billet de banque.

8. Machine à imprimer avec un ensemble présentant une unité de commande, dans laquelle l'unité de commande de cet ensemble est réalisée pour mettre en œuvre le procédé selon l'une quelconque des revendications 1 à 7, dans laquelle l'ensemble présente une caméra à balayage linéaire disposée dans la machine à imprimer et un dispositif d'exposition, dans laquelle la caméra à balayage linéaire et le dispositif d'exposition sont dirigées sur une voie de transport d'un substrat d'impression transporté à travers la machine à imprimer et imprimé à cet endroit dans au moins un groupe d'impression et sont disposés sur la même face de ce substrat d'impression, **caractérisée en ce que** le dispositif d'exposition dans un même boîtier présente en plus d'une source de lumière pour l'exposition du substrat d'impression avec une lumière blanche une source de lumière pour l'exposition du substrat d'impression avec une lumière UV et/ou une source de lumière pour l'exposition du substrat d'impression avec une lumière IR, dans laquelle la source de lumière pour l'exposition du substrat d'impression avec une lumière blanche et la source de lumière pour l'exposition du substrat d'impression avec une lumière UV et/ou la source de lumière pour l'exposition du substrat d'impression avec une lumière IR sont activées de manière asynchrone et intermittente par l'unité de commande pendant la durée (T1) du temps de mise en marche (EZ) de la caméra à balayage linéaire.

9. Machine à imprimer selon la revendication 8, **caractérisée en ce que** l'unité de commande est réalisée de telle sorte qu'elle commande la caméra à balayage linéaire concernée et le dispositif d'exposition respectivement en fonction d'un signal d'un codeur ou transmetteur de valeur absolue disposé dans la machine à imprimer.

10. Machine à imprimer selon la revendication 8 ou 9, **caractérisée en ce qu'**un dispositif de transport transportant le substrat d'impression à travers la machine à imprimer est prévu, dans laquelle ce dispositif de transport est réalisé sous la forme d'une bande de transport ou sous la forme d'un cylindre de transport.

11. Machine à imprimer selon la revendication 8 ou 9 ou 10, **caractérisée en ce que** les sources de lumière du dispositif d'exposition sont disposées respectivement sur une droite s'étendant transversalement par rapport à la direction de transport du substrat d'impression.

12. Machine à imprimer selon la revendication 8 ou 9 ou 10 ou 11, **caractérisée en ce que** les sources de lumière du dispositif d'exposition sont réalisées respectivement sous la forme de DEL ou de diodes laser.
